# EUROPÄISCHE PATENTANMELDUNG

(11) **EP 4 388 951 A1**
(43) Veröffentlichungstag der Anmeldung: **26.06.2024**
(21) Anmeldenummer: 23214992.2
(22) Anmeldetag: 07.12.2023
(51) Int. Cl.: A47J 47/00

(54) **SCHNEIDBRETT**

(30) Priorität: 23.12.2022 CH 15632022; 05.06.2023 CH 5902023
(71) Anmelder: Gut & Praktisch GmbH, 8048 Zürich (CH)
(72) Erfinder: Gut, Andreas, 8048 Zürich (CH)
(74) Vertreter: Zwick, Evelyn

(57) **Zusammenfassung**

Die Erfindung betrifft ein Schneidbrett (1) umfassend eine flache, formfeste Unterlage (2) mit einer Oberseite (3), einer Unterseite (4) und einer Umfangskante (5), geeignet, um Lebensmittel darauf zu schneiden. An einem ersten Abschnitt (6) der Umfangskante (5) ist ein Kragen (8) angebracht. Dieser weist eine durchgehende, formfeste Leiste (9) gleichmässig beabstandet zur Umfangskante (5) auf, sowie eine Membran (10), welche die Leiste (9) mit der Unterlage (2) verbindet. Die Membran (10) weist mindestens zwei Soll-Faltstellen (11) auf, an welchen sie reversibel ein- und ausgeklappt werden kann, zum Heben resp. Senken der Leiste (9). Der Kragen (8) und die Leiste (9) erstrecken sich über mindestens 90°, vorzugsweise 180° der Umfangskante (5). Die formfeste Leiste (9) weist ein erstes freies Ende (12) und ein davon distanziertes zweites freies Ende (13) auf, sodass auch im ausgeklappten Zustand der Membran (10) die gesamte Leiste (9) zwischen ihren freien Enden (12, 13) zur Umfangskante (5) gleichmässig beabstandet ist.

## Beschreibung

Die Erfindung betrifft ein Schneidbrett umfassend eine flache, formfeste Unterlage mit einer Oberseite, einer Unterseite und einer Umfangskante, geeignet um Lebensmittel wie Gemüse, Früchte oder Fleisch darauf zu schneiden.

### Stand der Technik

Schneidbretter gehören in jeden Haushalt und werden in den verschiedensten Materialien und Massen angeboten. Manche verfügen über ein Greifloch, an dem es aufgenommen oder aufgehängt werden kann, andere über einen Griff, der üblicherweise seitlich aus der Unterlage heraussteht, während wieder andere lediglich Fasen an zwei gegenüberliegenden Unterkanten aufweisen, an denen das Schneidbrett aufgenommen werden kann.

Zudem weisen manche Bretter nahe der Umfangskante eine durchgehende Vertiefung auf, um beispielsweise Bratensaft aufzufangen, der beim Schneiden aus dem Fleisch austritt.

Als geeignete Materialien haben sich mehrheitlich Holz und Kunststoff durchgesetzt, wobei auch auf Glas oder Metall geschnitten werden kann. In der Regel werden aber weichere Materialien bevorzugt, um beim Schneiden die Messerklinge zu schonen.

Auch in den Formen gibt es Unterschiede. Beliebte Modelle umfassen runde, ovale, rechteckige mit abgerundeten Kanten, oder quadratische Schneidbretter, während auch andere Formen beliebiger Gestalt angeboten werden, beispielsweise in Form von Umrissen von Tieren oder Surfbrettern.

Schneidbretter haben sich bewährt, der Käufer kann sich über eine breite Auswahl von Schneidbrettern erfreuen.

Aus der US11503962B1 ist ein Schneidbrett mit einem einseitigen, nach unten vorragenden Winkel beschrieben, an dem es beispielsweise am Rand des Spülbeckens arretierbar ist. Zudem verfügt es über einen Auffangbehälter für Flüssigleiten wie Bratensaft.

Aus der US11503961B1 ist ein faltbares Schneidbrett bekannt, das aus mindestens drei Teilbrettern besteht, die platzsparend zusammengeklappt werden können.

Zudem ist aus der US20161837 ein Schneidbrett bekannt, das in einem Teilbereich seines Umfangs, über eine Kante und zwei angrenzende gerundete Ecken geführt, ein Haubenelement aufweist. Dieses Haubenelement umfasst eine flexible, gefaltete und zu einem U gekrümmte Wand mit einem abschliessenden starren Rand und lässt sich um eine Drehachse, die parallel zur Kante auf dem Brett angeordnet ist, aufschwenken. Im aufgeschwenkten Zustand entsteht so bereichsweise eine nach oben gewölbte Haubenwand, die, ausgehend von der Drehachse, stetig höher wird und oberhalb der Kante schliesslich ihr Maximum erreicht. Der starre Rand gewährleistet, dass die Form der Haube beigehalten wird und unterstützt das Umwandeln des Haubenelements zwischen der aufgeschwenkten und der zusammengefalteten Konfiguration.

Nachteilig an dieser Ausführung ist die geringe Höhe der Haubenwand an den Bereichen von der Drehachse bis zu den gerundeten Ecken. Zudem ist das Umformen zwischen den beiden Konfiguationen der Haube schwierig, weil der starre Rand durch die obere Kante, die beidseitig bis zum Brett reicht, wenig Spielraum lässt, um die Falten in der flexiblen Wand zu bilden.

Weitere Erfindungen befassen sich mit Schneidbrettern in Kombination mit schliessbaren Behältern oder mit Kombinationen zu anderen Eigenschaften.

### Darstellung der Erfindung

Es ist die Aufgabe der vorliegenden Erfindung, ein eingangs beschriebenes Schneidbrett zu beschreiben, das verbesserte Eigenschaften aufweist, die im Alltag beim Schneiden genutzt werden können.

Die Aufgabe wird gelöst durch die Merkmale des ersten Patentanspruchs. Erfindungsgemäss ist an einem ersten Abschnitt der Umfangskante ein Kragen angebracht. Dieser weist eine durchgehende, formfeste Leiste, gleichmässig beabstandet zur Umfangskante auf, sowie eine Membran, welche die Leiste mit der Unterlage verbindet. Die Membran weist mindestens zwei Soll-Faltstellen auf, an welchen sie reversibel ein- und ausgeklappt werden kann, zum Heben resp. Senken der Leiste. Der Kragen und die Leiste erstrecken sich über mindestens 90°, vorzugsweise 180° der Umfangskante. Die formfeste Leiste weist ein erstes freies Ende und ein davon distanziertes zweites freies Ende auf, sodass auch im ausgeklappten Zustand der Membran die gesamte Leiste zwischen ihren freien Enden zur Umfangskante gleichmässig beabstandet ist.

Der Kragen hat eine gleichmässige Höhe bis zur gesamten formfesten Leiste, die sich zwischen ihrem ersten und ihrem zweiten Ende erstreckt.

Diese freien Enden der Leiste erlauben es, dass der Membran beim Heben und Senken der Leiste mehr Freiheit geboten wird, als dies bei der Ausführung nach dem Stand der Technik möglich ist. Die freien Enden können sich beim Ein- und Ausklappen daher auch in Ebenen parallel zum Schneidbrett bewegen und zeitweise höher als der Rest der formfesten Leiste sein. Dadurch wird die Membran beim Umformen geschont und ihre Langlebigkeit gefördert. Die freien Enden sind nicht wie beim Stand der Technik zwangsweise beim Heben und Senken der Leiste geführt, sondern können sich so weit weg von der Umfangskante entfernen wie der Rest der Leiste.

Da die Enden «frei» sind, können sie unterschiedliche Positionen einnehmen. So ist es beispielsweise auch möglich, nur eines der freien Enden zu heben, während das andere freie Ende bei der Unterlage bleibt. Dadurch wird die Hälfte der Membran ausgeklappt, bevorzugt auf der hinteren Seite des Schneidbrettes. Dadurch entsteht für einen Benutzer im ihm nahen Bereich mehr Raum zum Arbeiten, bei einer kleineren Auffangwand. Sobald sich beim Arbeiten die Menge von Lebensmitteln auf dem Brett anhäufen, kann auch das zweite freie Ende der Leiste angehoben werden, um von einer gleichmässig hohen Auffangwand zu profitieren. Durch die freien Enden der formfesten Leiste und die gleichmässige Beabstandung zum Schneidbrett wird dadurch ein grosser Raum mit einer gleichmässig hohen Membranwand geschaffen, welche auch voluminöse Esswaren auf dem Schneidbrett sichern kann.

Im Gegensatz zur Ausführung nach dem Stand der Technik weist die formfeste Leiste zwei freie Enden auf, sodass die Leiste im ausgeklappten Zustand gesamthaft bis zu ihren Enden in einer Ebene parallel zur Unterlage liegt. Die Höhe der Membran ist überall gleich hoch, wodurch im ausgeklappten Zustand eine gleichmässige Wand entsteht, welche einen grossen Auffangraum bildet.

Mit diesem Kragen ist es möglich, das Schneidbrett in zwei unterschiedliche End-Stellungen zu bringen: In eine erste, wenn der Kragen ausgeklappt ist, und in eine zweite, wenn der Kragen eingeklappt ist. In beiden Stellungen ist die gesamte formfeste Leiste parallel zur Umfangskante. Jede dieser Stellungen bringt Vorteile:
In der ausgeklappten Stellung ist die Unterlage des Schneidbretts durch eine hohe Wand begrenzt, die als Auffangwand dienen kann. So kann gerüstetes Lebensmittel wie gehackte Zwiebeln im ersten Abschnitt bis an den Rand der Unterlage geschoben werden, ohne dass eine Gefahr besteht, dass es vom Brett rutscht. Auch kullernde Lebensmittel wie Cherry Tomaten, Oliven, Champignons oder Haselnüsse können dort sicher gelagert werden, bevor sie verarbeitet werden. Die Unterlage kann bis zur Lieste mit Lebensmitteln angehäuft werden, wodurch mehr Platz bleibt zum Rüsten.

Bei einem hoch ausgestalteten Kragen reicht der Platz innerhalb des Kragens sogar für eine Portion von vorbereitetem Blattsalat. Zudem kann können Lebensmittel wie Cherry Tomaten direkt in diesem schalenartigen Kragen-Unterlagen Gebilde gewaschen werden, bevor sie geschnitten werden. Damit das Wasser wieder abfliessen kann, können geeignete siebartige Aussparungen im Kragen angebracht sein, nahe der Unterlage.

In der eingeklappten Stellung braucht das Schneidbrett kaum mehr Platz als ein herkömmliches Schneidbrett und kann somit platzsparend in einer Schublade oder in einem Regal versorgt werden. Je nach Materialstärke der Unterlage kann der Kragen aber auch im eingeklappten Zustand noch etwas über die Oberseite der Unterlage hinausragen. Dies reicht aus, damit die oben im Beispiel genannten kullernden Lebensmittel im Bereich des Kragens nicht von der Unterlage rollen können.

Der Kragen kann aber auch so dimensioniert sein, dass die Oberkante der Leiste im eingeklappten Zustand nicht über die Oberseite der Unterlage hinausragt. Dadurch kann überall auf dem Brett bis an den Rand geschnitten werden. Der Kragen erreicht im ausgeklappten Zustand dann eine Höhe über der Oberseite, die doppelt so hoch ist wie die Materialstärke der Unterlage. Dies, wenn der Kragen eine «Z»-Faltung aufweist. Bei mehrfachem Falten der Membran, als «Doppel-Z» beuzeichnet, wird der Kragen entsprechend höher.

Das erfindungsgemässe Schneidbrett kann mit jedem der eingangs beschriebenen Schneidbretter kombiniert werden. Zudem ist es leicht zu reinigen.

Weitere erfindungsgemäss Ausgestaltungen sind in den Unteransprüchen beschrieben.

### Kurze Beschreibung der Zeichnungen

Im Folgenden wird die Erfindung in verschiedenen Zeichnungen dargestellt und mit Hilfe der später erläuterten Bezugszeichen näher erklärt. Jedes Bezugszeichen bezieht sich stets auf denselben Sachverhalt. Alle Figure zeigen dieselbe Ausführung in verschiedenen Stellungen, oder Ausschnitte davon, wobei auch einige der optionalen Merkmale dargestellt sind. Es zeigen:
- Fig. 1: eine perspektivische Ansicht des erfindungsgemässen Schneidbretts jeweils in (1a) aufgeklapptem resp. (1b) zugeklapptem Zustand;
- Fig. 2: eine Aufsicht das Schneidbretts gemäss Fig. 1 jeweils in (2a) aufgeklapptem resp. (2b) zugeklapptem Zustand;
- Fig. 3: eine Schnittansicht durch A-A gemäss Fig. 2a resp. 2b jeweils in (3a) aufgeklapptem resp. (3b) zugeklapptem Zustand;
- Fig. 4: (4a) eine Seitenansicht in aufgeklapptem Zustand gemäss Fig. 2a oder 3a von links; (4b) eine zu A-A orthogonale Schnittansicht in zugeklapptem Zustand gemäss Fig. 2b oder 3b von links, im Bereich der Aussparungen;
- Fig. 5a: eine Detailansicht der Faltstellen als Zoomansicht der gekennzeichneten Stellen in Fig. 3a;
- Fig. 5b: eine Detailansicht der Faltstellen als Zoomansicht der gekennzeichneten Stellen in Fig. 4b.

### Wege zur Ausführung der Erfindung

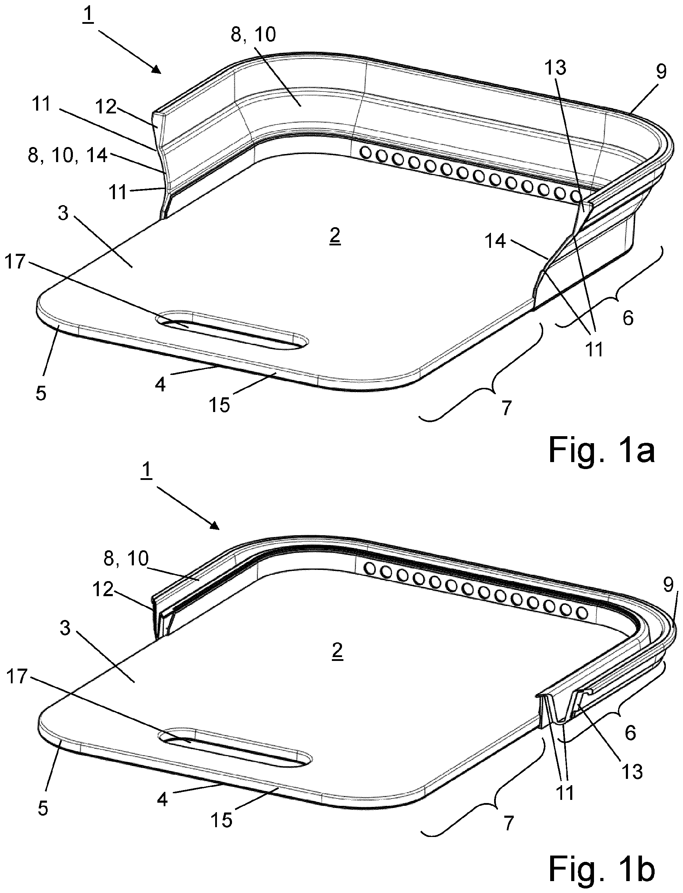

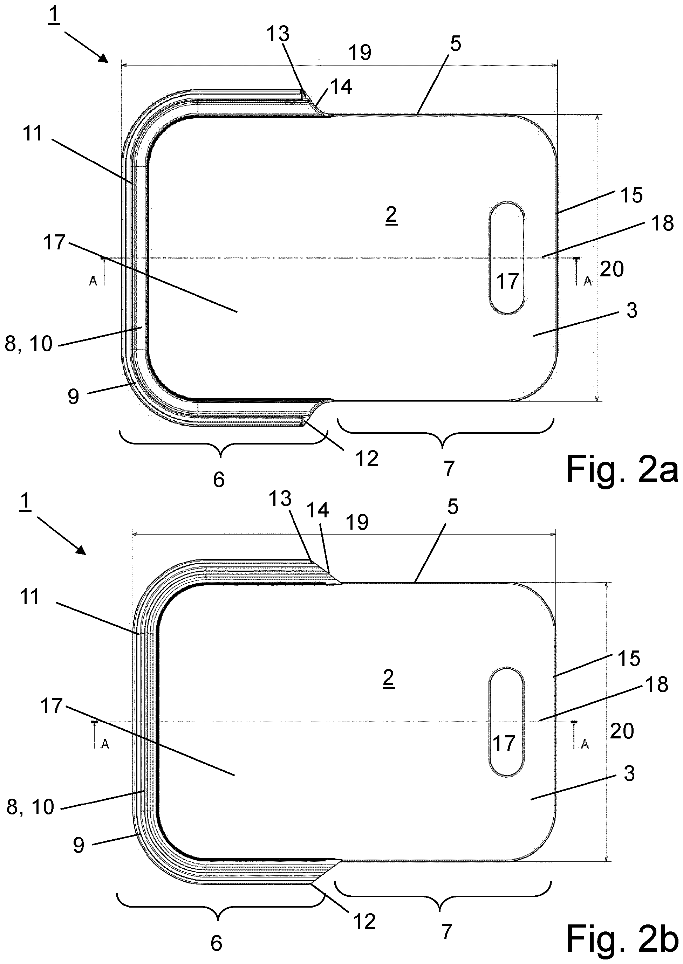

In Fig. 1 und 2 ist ein erfindungsgemässes Schneidbrett 1 jeweils perspektivisch dargestellt, wobei sich das Schneidbrett in Fig, 1a und 2a in aufgeklapptem, im Fig. 1b und 2b in eingeklapptem Zustand befindet. Es kann ein Greifloch 17 aufweisen.

Das Schneidbrett 1 umfasst jeweils eine flache, formfeste Unterlage 2 mit einer Oberseite 3, einer Unterseite 4 und einer Umfangskante 5. Es ist geeignet, wie jedes Küchenschneidbrett, um Lebensmittel wie Gemüse, Früchte oder Fleisch darauf zu rüsten und zu schneiden, und vieles mehr.

An einem ersten Abschnitt 6 der Umfangskante 5 ist ein Kragen 8 angebracht, der sich über mindestens 90°, vorzugsweise 180° der Umfangskante 5 erstreckt. Diese Winkelbestimmung bezieht sich auf die Ausrichtung einer umhüllenden Tangente. Eine solche Tangente entspricht dem Sachverhalt einer flachen Platte, auf der das Schneidbrett 1 entlang seiner Umfangskante 5 abrollt.

Der Kragen 8 weist eine zusammenhängende, formfeste Leiste 9 auf, die gleichmässig beabstandet zur Umfangskante 5 verläuft. Eine Membran 10 verbindet die Leiste 9 mit der Unterlage 2. Diese Membran 10 weist mindestens zwei Soll-Faltstellen 11 auf, an welchen sie reversibel ein- und ausgeklappt werden kann, zum Heben resp. Senken der Leiste 9. Erfindungsgemäss weist die formfeste Leiste 9 ein erstes freies Ende 12 und ein davon distanziertes zweites freies Ende 13 auf. Dadurch, dass die Leiste 9 nicht zu einem Ring geschlossen, also nicht durchgehend ist, entsteht ausserhalb des ersten Abschnitts 6 ein zweiter Abschnitt 7 der Umfangskante 5, dem kein beabstandeter Leistenabschnitt zugeordnet ist wie im ersten Abschnitt 6. Am zweiten Abschnitt 7 ist kein Kragen 8 angeordnet, also auch keine Membran 10. In diesem zweiten Abschnitt 7 ragt dann nichts über die Oberseite 3 der Unterlage 2 hinaus. Somit kann in diesem Bereich des Schneidbretts 1 bis zum Rand hin geschnitten werden, wie bei jedem anderen Schneidbrett. In den Randgebieten zwischen dem ersten 6 und dem zweiten Abschnitt 7 ist zwar ein Kragen 8 angeordnet, aber die Leiste 9 kann etwas zurückversetzt enden, weil der Kragen 8 dort vorzugsweise in einer Schräge von der Unterlage 2 zur Leiste 9 verläuft.

In diesen Randgebieten unterhalb des ersten und zweiten freie Endes 12, 13 endet die Membran 10 jeweils in einer im Wesentlichen senkrecht, vorzugsweise leicht angeschrägt verlaufenden, freien Kante 14. Diese Schräge bildet zur Senkrechten einen Winkel von vorzugsweise weniger als 30°. In der freien Kante 14 enden auch die Soll-Faltstellen 11, wie beispielsweise in Fig. 1a ersichtlich ist. Die freien Enden 12, 13 sind durch diese freien Kanten 14 von der Unterlage 2 beabstandet, welche die Höhe der Membran 10 aufweist. Dadurch sind sie auch frei im Sinn von flexibel beweglich: Zum Einklappen kann beispielsweise erst der mittlere Teil der Leiste gesenkt werden, und anschliessend die freien Enden 12, 13. Dadurch wird die Membran 10 weniger stark beansprucht, weil die Freiheitsgrade im Bereich der freien Enden 12, 13 sehr gross ist. Andererseits kann eines der Enden 12 gesenkt werden, während das andere Ende 13 noch ausgeklappt oben verweilt, die Leiste 9 verläuft dann schräg einseitig abfallend. In diesem Zustand entsteht einseitig mehr Bewegungsfreiheit für den Benutzer, während gegenüber dennoch ein grosser Kragen 8 die Lebensmittel auf dem Schneidbrett 1 sichert.

Je nach Bedarf kann der Kragen 8 des Schneidbretts 1 aus- oder eingeklappt werden. Im ausgeklappten Zustand ragt die formfeste Leiste 9 weit über der Oberseite 3 hinaus, sodass die Membran 10 eine hohe Wand bildet, welche das Wegrollen oder Wegfallen von Lebensmitteln von der Unterlage 2 verhindert. Die Membran 10 dient dann als Auffangwand und bildet eine Art Mulde.

Wie in den Figuren ersichtlich ist, weist die Membran 10 auch im ausgeklappten Zustand eine konstante, überall gleiche Höhe auf. Ihr gesamter obere Rand ist mit der formfesten Leiste 9 versehen. Im ausgeklappten Zustand befindet sich somit die formfeste obere Leiste 9 mit ihren freien Enden 12, 13 in einer Ebene parallel zur Unterlage 2. Auch die Soll-Faltstellen 11 verlaufen überall parallel zur Unterlage 2, in beiden Zuständen.

Im eingeklappten Zustand wie in Fig. 1b oder 2b dargestellt ist die Leiste 9 nur wenig höher als die Oberseite 3 der Unterlage 2. Je nach Dimensionierung der Dicke der Unterlage 2 und der Höhe des Kragens 8 können der Kragen 8 und die Leiste 9 im eingeklappten Zustand auch vollkommen unterhalb der Oberseite 3 zu liegen kommen. Dann ist das Schneidbrett 1 vollkommen identisch verwendbar wie ein herkömmliches Schneidbrett 1 ohne Kragen 8. Insbesondere betrifft das auch den Platzbedarf beim Versorgen.

In Fig. 2a und 2b ist ein erfindungsgemässes Schneidbrett 1 von oben dargestellt, in Fig. 2a im ausgeklappten, in Fig. 2b im eingeklappten Zustand. Hier ist der angeschrägte Bereich des Kragens auch gut erkennbar. Dieser verhindert eine eckige Kante im Bereich des ersten 12 und zweiten freien Endes 13 der Leiste 9. Dadurch, dass die Leiste 9 formfest ist, bleibt die Distanz zwischen den beiden freien Enden 12, 13 stets konstant, obwohl die Leiste 9 nicht geschlossen ist. Somit ist die Membrane 10 in jedem Zustand gut durch die Leiste 9 geführt.

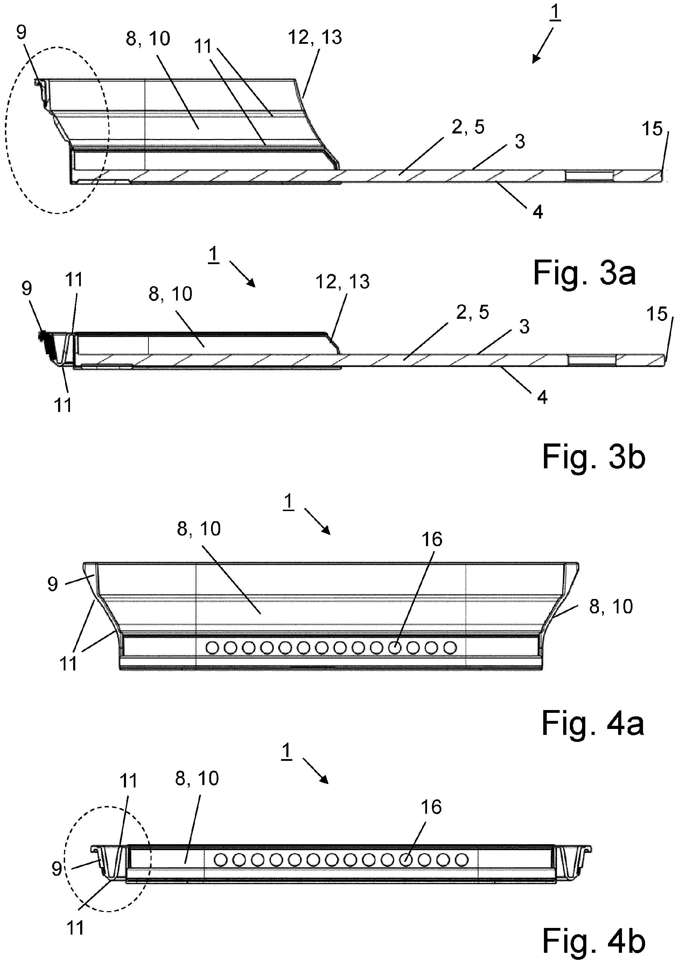

In den Figuren 3a und 3b ist das Schneidbrett 1 im Schnitt entlang A-A dargestellt, wiederum im ausresp. eingeklappten Zustand. In Fig. 3b ist somit ersichtlich, wie sich die Membran 10, die in Fig, 3a fast gestreckt ist, zu einer Z-Form faltet. Die Ausrichtung der Leiste 9 bleibt dabei gleich: ihre obere Kante bleibt stets oben. Nur ein mittlerer Bereich der Membran 10, der zwischen den Soll-Faltstellen 11 angeordnet ist, kippt beim Ein- resp. Ausklappen, um etwa 180°. Die Soll-Faltstellen 11 müssen entsprechend so ausgestaltet sein, dass sich die Membran 10 dort, ohne Materialermüdung zu erleiden, oft biegen lässt. Der mittlere Bereich hat eine gleichmässige Höhe. Alle Soll-Faltstellen 11 verlaufen parallel zueinander und parallel zur Unterseite 2, sodass sie überall gleichmässig voneinander beabstandet sind. Dies geht auch aus den Figuren hervor.

Vorzugsweise macht der erste Abschnitt 6 höchstens 50% der gesamten Umfangskante, vorzugsweise zwischen 35 und 45% davon aus. Somit bleibt ausreichend Platz auf dem Schneidbrett, der für Hände und Messer gut zugänglich ist.

Insbesondere kann die Unterlage 2 rund, oval rechteckig oder quadratisch mit abgerundeten Ecken ausgestaltet sein. Auch andere Formen, insbesondere Umrissformen, die wiedererkennbare Silhouetten darstellen, sind möglich. Wichtig ist hingegen, dass die Umfangskante 5 im ersten Abschnitt 6 keine Ecken, sondern Radien, vorzugsweise nicht zu kleine Radien aufweist, damit die Membran 10 beim Ein- und Ausklappen genügend Raum für eine Umstülpung bekommt.

Vorteilhaft ist zudem, wenn der erste Abschnitt 6 mit dem Kragen 8 spiegelsymmetrisch mit einer Symmetrieachse 18 ausgestaltet ist, sodass beide freien Enden 12, 13 gleich weit vom Schnittpunkt der Leiste 9 mit der Symmetrieachse 18 entfernt sind. Dadurch ist der Gebrauch des Schneidbretts 1 für Rechts- und für Linkshänder identisch im Gebrauch.

Der Kragen 8 kann insbesondere verhindern, dass Flüssigkeit vom Schneidbrett 1 abfliesst, etwa Bratensaft oder Fruchtsaft beim Schneiden von saftigen Lebensmitteln. Dazu wird der Bereich der Unterlage 2, der dem Kragen 8 gegenüber liegt, bevorzugt ein wenig angehoben. So wird sichergestellt, dass der Saft im Kragen 8 aufgefangen wird und nicht im zweiten Abschnitt 7 abfliesst.

Dazu kann die Unterlage 2 dort prinzipiell mit irgendeinem nicht zu hohen Gegenstand unterlegt werden, der gerade zu Hand ist, beispielsweise mit einem Bleistift. Andererseits können an der Unterlage 2 ein oder mehrere bewegliche Mittel 14 vorgesehen sein, mit welchen die Unterlage 2 im zweiten Abschnitt 7 aufgebockt werden kann, um die gewünschte Neigestellung zu erreichen. Im ersten Abschnitt 6, der dann tiefer gelegen ist, ist der Kragen 8 angeordnet, um Flüssigkeit wie Fleischsaft auffangen zu können. Solche Mittel können beispielsweise einen Bleistift-ähnlichen Stab enthalten, der an zwei flexiblen Verbindungen in zwei Bohrungen an einer Stirnfront 15 der Umfangskante 5 im zweiten Abschnitt 7 der Unterlage 2 angebracht ist. Der Stab liegt dann entweder neben der Unterlage 2, parallel zur Stirnfront 15, mit geraden Verbindungen, oder unter der Unterlage 2 im Bereich nahe der Stirnfront 15, mit gebogenen Verbindungen (nicht dargestellt). Alternativ dazu kann ein starrer Bügel schwenkbar an fluchtenden Bohrungen beidseitig neben der Stirnfront 15 an der Umfangskante 5 angebracht sein (nicht dargestellt). Auch ein solcher Bügel kann neben oder unter der Unterlage 2 angeordnet sein. Diese Mittel können auch abnehmbar angebracht sein, beispielsweise indem ihre Befestigungen in den Bohrungen einrasten. Wenn der Halt ausreichend ist oder gesichert werden kann, kann das Mittel auch zum Tragen und/oder Aufhängen verwendet werden.

Die Mittel können durch Schwenken, Schieben oder Klappen unter die Unterseite der Unterlage 2 gebracht werden, sodass sich die Unterlage 2 auf diesen Mitteln abstützen kann.

Vorzugsweise kann die Leiste 9 in einem Bereich, beispielsweise in einer abgerundeten Ecke, zu einem Ausgussschnabel geformt sein (nicht dargestellt). Dies ermöglicht ein kontrolliertes Abgiessen der aufgefangenen Flüssigkeit. Zudem kann beispielsweise Salat zerkleinert und anschliessend im schalenartigen Bereich des Kragens 8 unter dem Wasserhahn gewaschen werden. Das Wasser kann dann am Ausgussschnabel abgegossen werden. Der Kragen kann somit auch zum Waschen von Lebensmitteln, beispielsweise Datteltomaten oder Beeren, genutzt werden. Es erübrigt sich, dafür extra ein Sieb zu verwenden.

Die Unterlage 2 weist eine Gesamtlänge 19 und eine dazu nicht längere Gesamtbreite 20 auf. Es ist für gewisse Anwendungen von Vorteil, wenn sich der Kragen 8 über die gesamte Gesamtlänge 19 der Unterlage 2 erstreckt. Für andere Anwendungen hingegen ist es von Vorteil, wenn sich der Kragen 8 über die gesamte Gesamtbreite 20 der Unterlage 2 erstreckt. So können verschiedene Varianten angeboten werden.

Vorzugsweise sind mindestens in einem Bereich der Membran 10 nahe an der Unterlage 2 siebartige Aussparungen 16 angeordnet, welche geeignet ist, um eine Flüssigkeit abzugiessen. Wenn diese mindestens ein wenig von der Oberseite 3 beabstandet angeordnet sind, so kann Saft aufgefangen werden, der durch weiteres Kippen aber leicht abgegossen werden kann. Auch beim Waschen von Lebensmitteln können solche Aussparungen zum Abgiessen des Wassers 16 hilfreich sein.

Fig, 4a und 4b zeigen solche Aussparungen 16 in einer Seitenansicht (Fig. 4a) resp. in einer Schnittansicht (Fig. 4b), wiederum in beiden Zuständen. Hier sind die Aussparungen 16 nur wenig über der Oberseite 3 angeordnet.

Vorzugsweise bestehen die Unterlage 2 sowie die Leiste 9 aus demselben Material, vorzugsweise mehrheitlich aus Kunststoff, insbesondere aus Polyethylen oder Polypropylen, aus einem Papierverbundstoff, aus Holz oder einer Mischung davon. Die Membran 10 besteht vorzugsweise mehrheitlich aus Silikon oder Ethylen-Propylen-Dien-Kautschuk (EPDM) oder einer Mischung davon.

Insbesondere kann die flexible Membran 10, die im Längsschnitt gestreckt die Form eines «I» hat, wie in Fig. 4a ersichtlich, genau zwei, drei oder vier Soll-Faltstellen 11 aufweisen, sodass sie Zickzack-förmig, beispielsweise zu einem «Z» gefaltet werden kann, wie in Fig. 4b ersichtlich, sodass die Leiste 9 beim Einfalten der Membran 10 platzsparend nahe an der Unterlage 2 angeordnet ist.

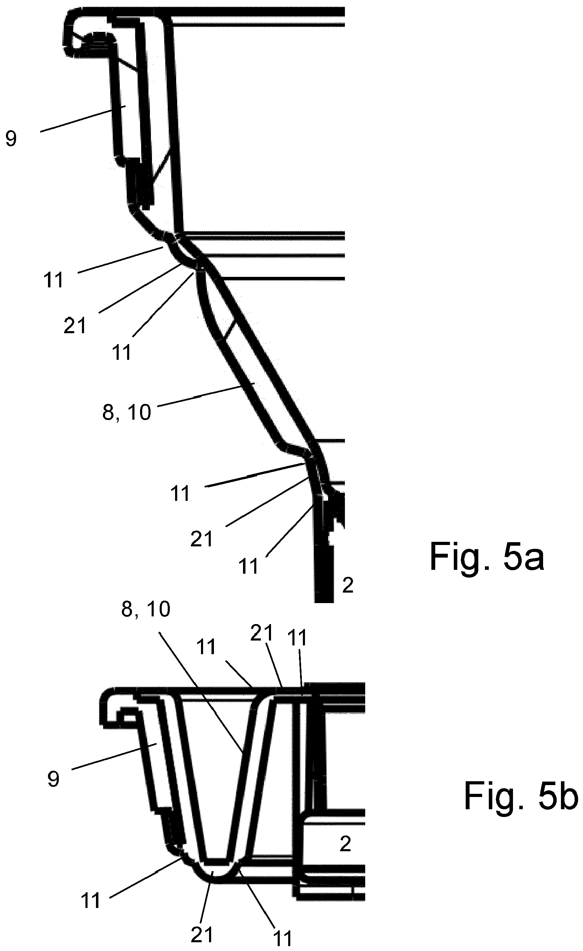

In den Figuren 5a und 5b sind in Zoomdarstellungen die Faltstellen 11 gut ersichtlich. Bei beiden Faltungen oder Zacken dieser Z-Ecken können jeweils ein oder zwei Faltstellen 11 angeordnet sein. Da beide Faltungen jeweils um fast 180° gefaltet werden, sind in den Figuren jeweils zwei etwas beabstandete Faltstellen 11 ausgestaltet, also insgesamt vier. Zwischen jeweils nahen Faltstellen 11 einer Faltung bilden sich kurze Stege 21 aus, die in Fig. 5b horizontal verlaufen, in Fig. 5a hingegen fast vertikal. Auf diese Weise wird das Material der Membran 10 geschont und das Schneidbrett 1 ist über einen langen Zeitraum benutzbar, ohne dass die Membran 10 durchbricht.

Zudem können weitere Faltstellen 11 angeordnet sein, sodass bei der Faltung ein «Doppel-Z» entsteht, mit zwei zusätzlichen Zacken, die jeweils als einzelne Faltstelle 11 oder als Doppelfaltstelle mit zwei Faltstellen 11, getrennt durch einen Steg 21, ausgestaltet werden können.

### Bezugszeichenliste

- 1: Schneidbrett
- 2: Unterlage
- 3: Oberseite
- 4: Unterseite
- 5: Umfangskante
- 6: ersten Abschnitt
- 7: zweiter Abschnitt
- 8: Kragen
- 9: Leiste, formfest
- 10: Membran
- 11: Soll-Faltstellen
- 12: erstes freies Ende (der formfesten Leiste)
- 13: zweites freies Ende (der formfesten Leiste)
- 14: freie Kante (der Membran)
- 15: Stirnfront
- 16: Aussparungen
- 17: Greifloch
- 18: Symmetrieachse
- 19: Gesamtlänge
- 20: Gesamtbreite
- 21: Steg

## Patentansprüche

1. Schneidbrett (1) umfassend eine flache, formfeste Unterlage (2) mit einer Oberseite (3), einer Unterseite (4) und einer Umfangskante (5), geeignet um Lebensmittel wie Gemüse, Früchte oder Fleisch darauf zu schneiden, wobei an einem ersten Abschnitt (6) der Umfangskante (5) ein Kragen (8) angebracht ist, der eine durchgehende, formfeste Leiste (9) gleichmässig beabstandet zur Umfangskante (5) aufweist, sowie eine Membran (10), welche die Leiste (9) mit der Unterlage (2) verbindet und welche mindestens zwei Soll-Faltstellen (11) aufweist, an welchen die Membran (10) reversibel ein- und ausgeklappt werden kann, zum Heben resp. Senken der Leiste (9), wobei sich der Kragen (8) und die Leiste (9) über mindestens 90°, vorzugsweise 180° der Umfangskante (5) erstrecken, **dadurch gekennzeichnet, dass** die formfeste Leiste (9) ein erstes freies Ende (12) und ein davon distanziertes zweites freies Ende (13) aufweist, sodass auch im ausgeklappten Zustand der Membran (10) die gesamte Leiste (9) zwischen ihren freien Enden (12, 13) zur Umfangskante (5) gleichmässig beabstandet ist.

2. Schneidbrett (1) nach Anspruch 1, **dadurch gekennzeichnet, dass** die Umfangskante (5) einen zweiten Abschnitt (7) aufweist, an dem kein Kragen (8) angebracht ist.

3. Schneidbrett (1) nach Anspruch 1 oder 2, **dadurch gekennzeichnet, dass** der erste Abschnitt (6) höchstens 50% der gesamten Umfangskante (5), vorzugsweise zwischen 35 und 45% davon ausmacht.

4. Schneidbrett (1) nach einem der vorhergehenden Ansprüche, **dadurch gekennzeichnet, dass** die Unterlage (2) rund, oval oder rechteckig mit abgerundeten Ecken ausgestaltet ist.

5. Schneidbrett (1) nach einem der vorhergehenden Ansprüche, **dadurch gekennzeichnet, dass** der erste Abschnitt (6) mit dem Kragen (8) spiegelsymmetrisch mit einer Symmetrieachse (18) ausgestaltet ist, sodass beide freien Enden (12, 13) gleich weit vom Schnittpunkt (18) der Leiste (9) mit der Symmetrieachse (18) entfernt sind.

6. Schneidbrett (1) nach einem der vorhergehenden Ansprüche, **dadurch gekennzeichnet, dass** ein oder mehrere bewegliche und vorzugsweise abnehmbare Mittel an der Unterlage (2) vorgesehen sind, mit welchen eine Seite der Unterlage (2) aufgebockt werden kann, um diese in eine Neigestellung bringen zu können, wobei auf der unteren Seite der im aufgebockten Zustand geneigten Unterlage (2) der Kragen (8) angeordnet ist, um Flüssigkeit wie Fleischsaft auffangen zu können.

7. Schneidbrett (1) nach Anspruch 6, **dadurch gekennzeichnet, dass** diese Mittel durch Schwenken, Schieben oder Klappen unter die Unterseite (4) der Unterlage (2) gebracht werden können, sodass sich die Unterlage (2) auf diesen Mitteln abstützen kann.

8. Schneidbrett (1) nach einem der vorhergehenden Ansprüche, **dadurch gekennzeichnet, dass** die Leiste (9) in einem Bereich, vorzugsweise in einer abgerundeten Ecke, zu einem Ausgussschnabel geformt ist.

9. Schneidbrett (1) nach einem der vorhergehenden Ansprüche, **dadurch gekennzeichnet, dass** die Unterlage (2) eine Gesamtlänge (19) und eine dazu nicht längere Gesamtbreite (20) umfasst und sich der Kragen (8) über die gesamte Gesamtlänge (19) der Unterlage (2) erstreckt.

10. Schneidbrett (1) nach einem der Ansprüche 1 bis 8, **dadurch gekennzeichnet, dass** die Unterlage (2) eine Gesamtlänge (19) und eine dazu nicht längere Gesamtbreite (20) umfasst und sich der Kragen (8) über die Gesamtbreite (20) der Unterlage (2) erstreckt.

11. Schneidbrett (1) nach einem der vorhergehenden Ansprüche, **dadurch gekennzeichnet, dass** mindestens in einem Bereich der Membran (10) nahe an der Unterlage (2) Aussparungen (16) angeordnet sind, welche geeignet ist, um eine Flüssigkeit abzugiessen.

12. Schneidbrett (1) nach einem der vorhergehenden Ansprüche, **dadurch gekennzeichnet, dass** die Unterlage (2) sowie die Leiste (9) aus demselben Material bestehen, vorzugsweise mehrheitlich aus Kunststoff, insbesondere aus Polyethylen oder Polypropylen, aus einem Papierverbundstoff, aus Holz oder einer Mischung davon.

13. Schneidbrett (1) nach einem der vorhergehenden Ansprüche, **dadurch gekennzeichnet, dass** die Membran (10) mehrheitlich aus Silikon oder Ethylen-Propylen-Dien-Kautschuk (EPDM) oder einer Mischung davon besteht.

14. Schneidbrett (1) nach einem der vorhergehenden Ansprüche, **dadurch gekennzeichnet, dass** die flexible Membran (10) genau zwei, drei oder vier Soll-Faltstellen (11) aufweist, sodass sie Zickzack-förmig, beispielsweise zu einem «Z» gefaltet werden kann, damit die Leiste (9) beim Einfalten der Membran (10) platzsparend nahe an der Unterlage (2) angeordnet ist.

15. Schneidbrett (1) nach Anspruch 14, **dadurch gekennzeichnet, dass** jeweils zwei durch einen kurzen Steg (21) beabstandete Soll-Faltstellen (11) zum Bilden einer Falte angeordnet sind.
